# EUROPEAN PATENT APPLICATION

(11) **EP 2 840 283 A1**
(43) Date of publication of application: **25.02.2015**
(21) Application number: 14181806.2
(22) Date of filing: 21.08.2014
(51) Int. Cl.: F16H 25/22, B66B 9/02, B66B 11/04

(54) **Rotating member for an elevating device**

(30) Priority: 22.08.2013 TW 102215692 U
(71) Applicant: Chen, Min-Chin, Kaohsiung City 814 (TW)
(72) Inventor: Chen, Min-Chin, Kaohsiung City 814 (TW)
(74) Representative: Viering, Jentschura & Partner Patent- und Rechtsanwälte

(57) **Abstract**

A rotating member has a body (10), an axle (20) and multiple balls (30). The body (10) has an outer surface, a spiral groove (11) and a communicating channel (12). The spiral groove (11) is defined in the outer surface of the body (10). The communicating channel (12) is defined in the body (10) and communicates with the spiral groove (11) to form at least one recycling path in the body (10). The axle (20) extends through the body (10). The balls (30) are mounted in the spiral groove (11) and are moveable along the at least one recycling path. Accordingly, the smoothness of the movement of the rotating member is improved.

## Description

### 1. Field of the Invention

The present invention relates to a rotating member, and more particularly to a rotating member for an elevating device.

### 2. Description of Related Art

An elevator is moved upward or downward by a cable pulled by a driving device. A mechanical parking device is moved upward or downward by a cable or chain pulled by a driving device. However, the cable or chain for pulling the elevator or parking device may be broken, and the safety of using the cable or chain is not sufficient. TW patent application with publication No. 201326610, entitled to "Threaded Rod Unit and Elevating Device Having the Same", discloses an elevating device having a threaded rod, a rotating member, moving bracket, a motor and a transmission assembly. The rotating member engages with and is moveable along the threaded rod. The moving bracket is mounted over the rotating member, and the motor is mounted on the moving bracket. The transmission assembly is mounted between the motor and the rotating member, such that the rotating member can be rotated by the motor with the transmission of the transmission device to move along the threaded rod. However, the smoothness of the movement of the rotating member of the '610 Patent is insufficient and has to be improved.

To overcome the shortcomings, the present invention tends to provide a rotating member to mitigate or obviate the aforementioned problems.

The main objective of the invention is to provide a rotating member for an elevating device to improve the smoothness of movement of the rotating member.

The rotating member has a body, an axle and multiple balls. The body has an outer surface, a spiral groove and a communicating channel. The spiral groove is defined in the outer surface of the body. The communicating channel is defined in the body and communicates with the spiral groove to form at least one recycling path in the body. The axle extends through the body. The balls are mounted in the spiral groove and are moveable along the at least one recycling path.

Other objects, advantages and novel features of the invention will become more apparent from the following detailed description when taken in conjunction with the accompanying drawings.

### IN THE DRAWINGS

Fig. 1 is a perspective view of a first embodiment of a rotating member in accordance with the present invention;
Fig. 2 is a side view of the rotating member in Fig. 1;
Fig. 3 is an exploded perspective view of a second embodiment of a rotating member in accordance with the present invention;
Fig. 4 is a side view of the rotating member in Fig. 1;
Fig. 5 is a perspective view of a body of the rotating member in Fig. 3;
Fig. 6 is a side view of the body of the rotating member in Fig. 5;
Fig. 7 is a perspective view of a body of a third embodiment of a rotating member in accordance with the present invention;
Fig. 8 is a side view of the body of the rotating member in Fig. 7;
Fig. 9 is a perspective view in partial section of an elevating device having the rotating member in Fig 3;
Fig. 10 is a side view in partial section of the elevating device having the rotating member in Fig 9.

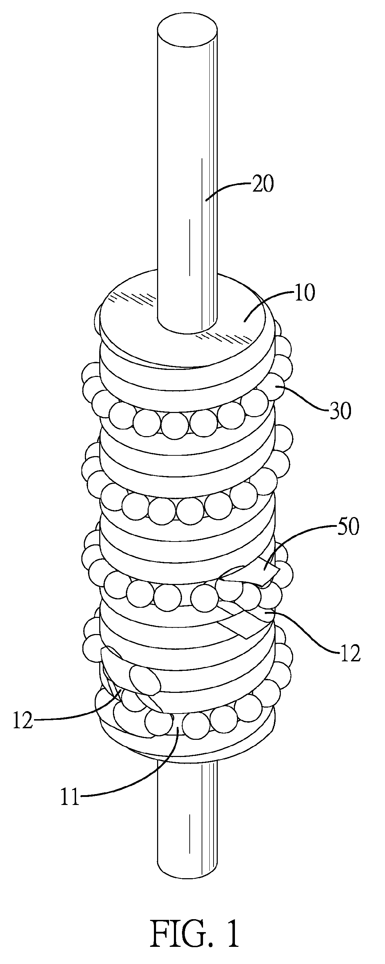

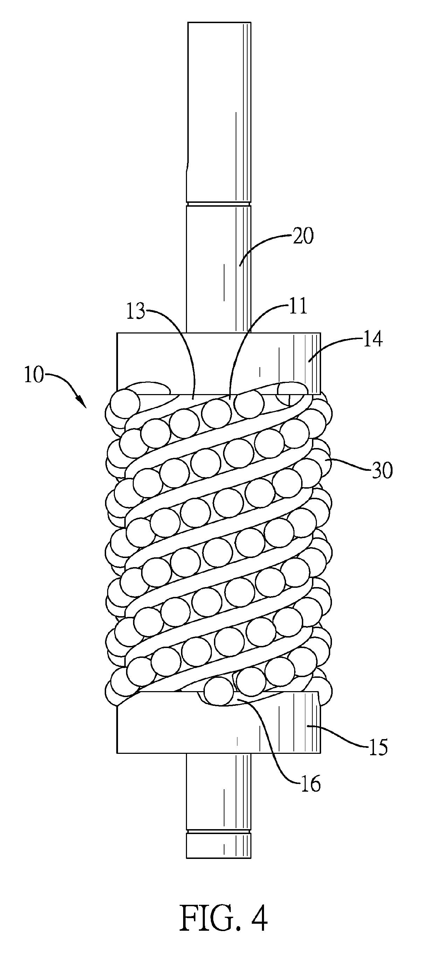

With reference to Figs. 1, 3 and 4, a rotating member for an elevating device in accordance with the present invention comprises a body 10, an axle 20 and multiple balls 30; and

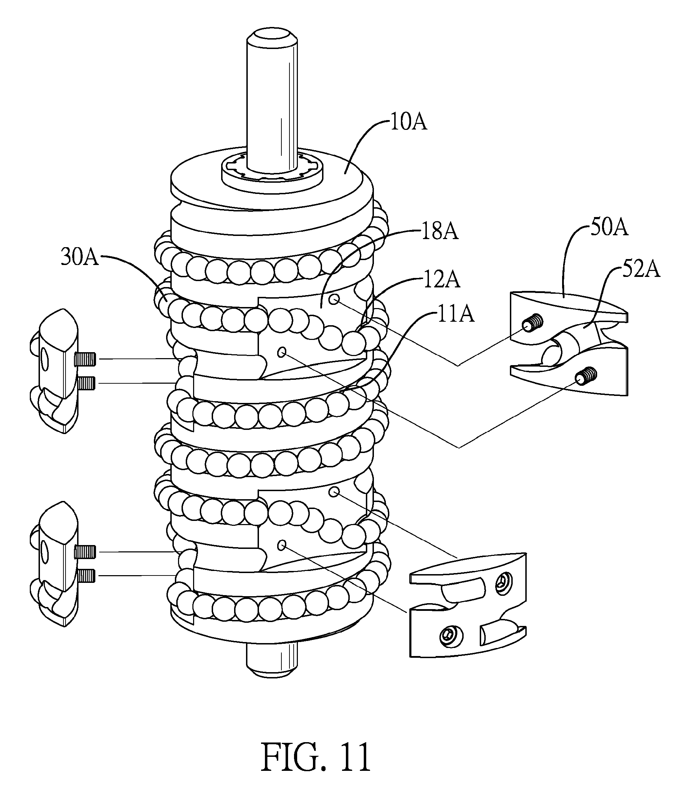

Fig. 11 is an exploded perspective view of a fourth embodiment of a rotating member in accordance with the present invention.

The body 10 has an outer surface, a spiral groove 11 and a communicating channel 12. The spiral groove 11 is defined in the outer surface of the body 10. The communicating channel 12 is defined in the body 10 and communicates with the spiral groove 11 to form at least one recycling path in the body 10. The axle 20 extends through the body 10 and has two ends protruding respectively from two ends of the body 10. The balls 30 are mounted in the spiral groove 11 and are moveable along the at least one recycling path.

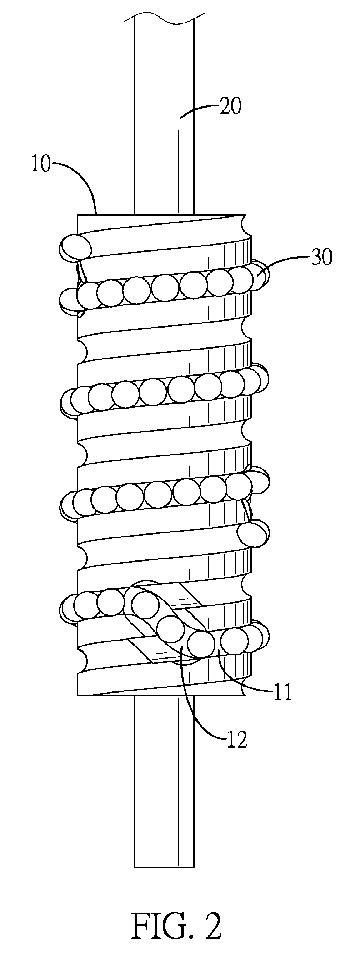

With reference to Figs. 1 and 2, the communicating channel 12 is defined in the outer surface of the body 10 and is connected with the spiral groove 11. In the first embodiment, four recycling paths are formed in the body 10. In addition, a guiding member 50 is mounted on the body 10 at a position corresponding to the communicating channel 12 to guide the balls 30 to enter smoothly into the spiral groove 11 from the communicating channel 12.

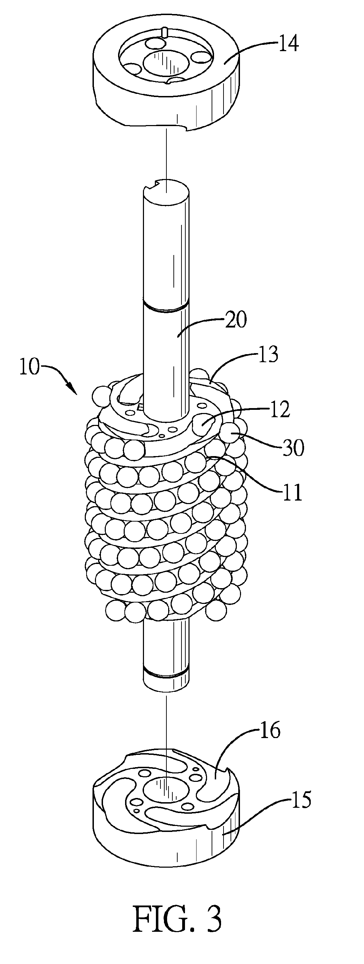

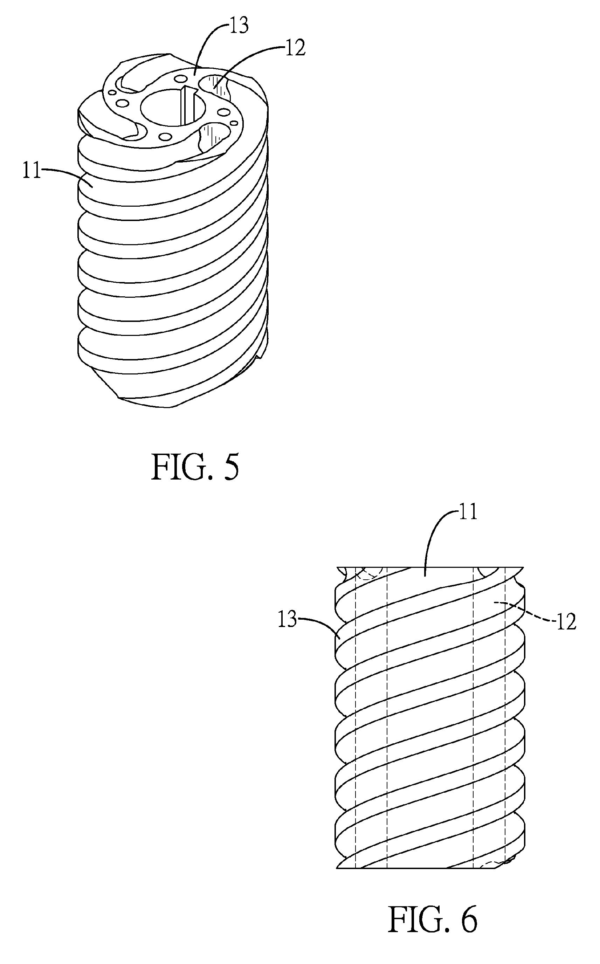

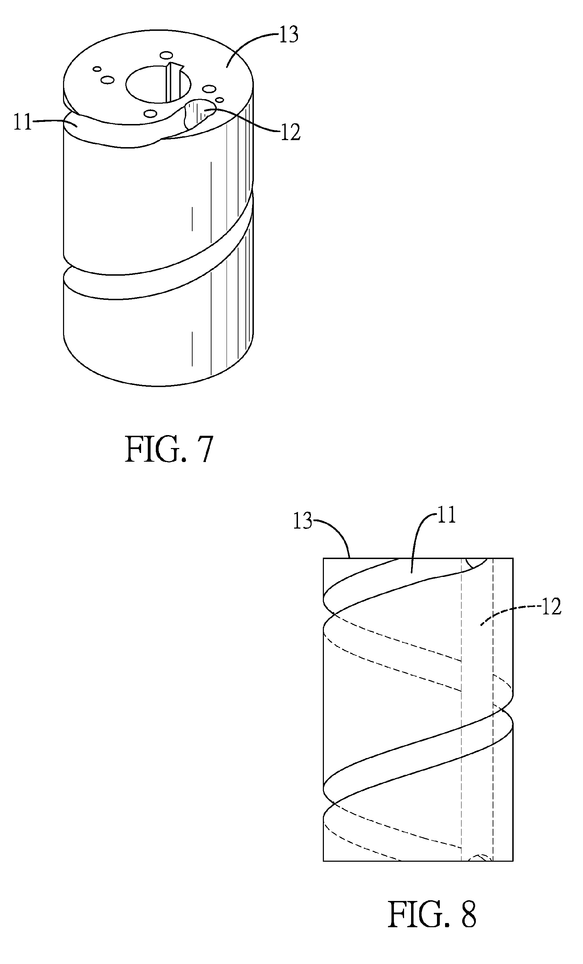

With reference to Figs. 3 to 6, the body 10 comprises a main segment 13, a first cap 14 and a second cap 15. The spiral groove 11 is defined in the main segment 13 and extends from a top end to a bottom end of the main segment 13. The communicating channel 12 is defined in the main segment 13 and is formed through the top end and the bottom end of the main segment 13. The first cap 14 is mounted on the top end of the main segment 13, and the second cap 15 is mounted on the bottom end of the main segment 13. Each cap 13,14 has a guiding groove 16 defined in the cap 13,14 at a side facing the mains segment 13 and communicating with the spiral groove 11. In the present embodiment, four recycling paths are formed in the main segment 13. With reference to Figs. 7 and 8, a single recycling path is formed in the main segment 13. Alternatively, two or three recycling paths may be formed in the main segment 13.

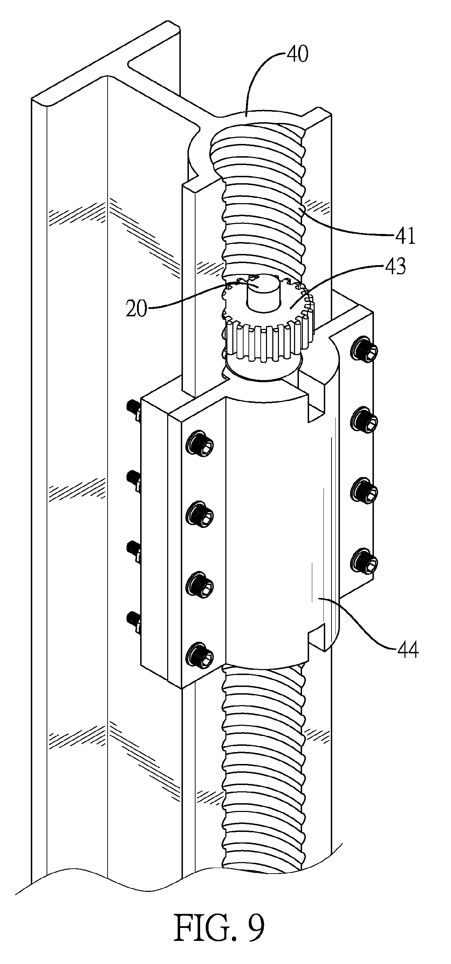

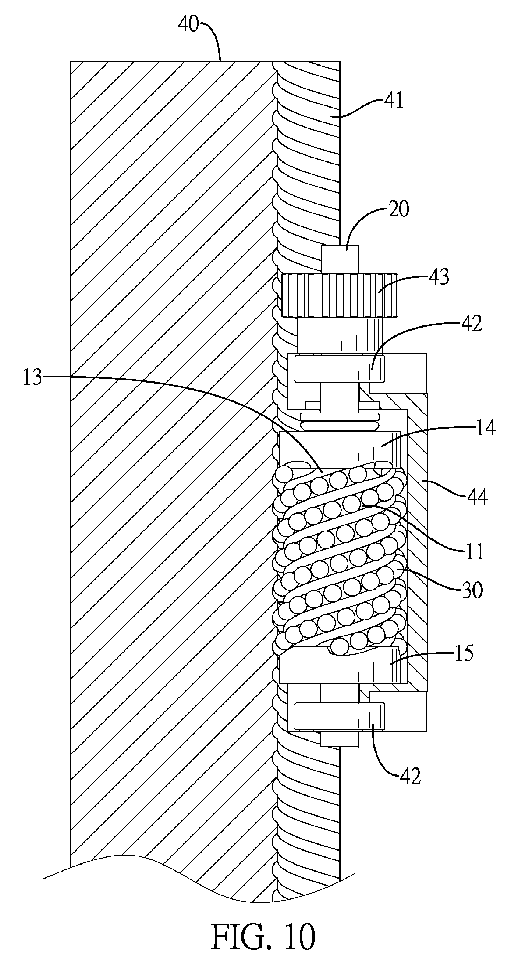

With reference to Figs. 9 and 10, the rotating member is applied to engage a threaded rod 40 of an elevating device. The rotating member is mounted on the threaded rod 40 by a holding bracket 44, and the balls 30 on the rotating member engage with the inner thread 41 in the threaded rod 40. A bearing 42 and a gear 43 are mounted on the axle 20, and the gear 43 is connected with a transmission assembly of the elevating device. The axle 20 with the gear 43 is rotated by a motor of the elevating device with the transmission of the transmission assembly, and the rotating member can move upward or downward along the threaded rod 40. During the movement of the rotating member, the balls 30 move along the spiral grooves 11, enter into the communicating channel 12 and move into the spiral groove 11 in sequence.

With the balls 30 moving inside the recycling path endlessly, the smoothness of the movement of the rotating member can be improved.

With reference to Fig. 11, multiple guiding members 50A are mounted on the body 10A to guide the balls 30Ato enter smoothly into the spiral groove 11A from the communicating channel 12A. The body 10A has multiple cutouts 18A formed in the outer surface of the body10A, and the guiding members 50A are mounted respectively in the cutouts 18A. Each guiding member 50A has a guiding channel 52A defined in the guiding member 50A at a side facing the body 10A and corresponding to and communicating with the communicating channel 12A to hold the balls 30A slidably in the guiding channel 52A and the communicating channel 12A.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A rotating member for an elevating device comprising:
a body (10) having
an outer surface;
a spiral groove (11) defined in the outer surface of the body (10); and
a communicating channel (12) defined in the body (10) and communicating with the spiral groove (11) to form at least one recycling path in the body (10);
an axle (20) extending through the body (10); and
multiple balls (30) mounted in the spiral groove (11) and being moveable along the at least one recycling path.

2. The rotating member as claimed in claim 1, wherein the communicating channel (12) is formed in the outer surface of the body (10).

3. The rotating member as claimed in claim 1, wherein
the body (10) comprises
a main segment (13) having a top end and a bottom end;
a first cap (14) mounted on the top end of the main segment (13); and
a second cap (15) mounted on the bottom end of the main segment (13);
the spiral groove (11) is formed in the main segment (10) and extending from the top end to the bottom end of the main segment (10);
the communicating channel (12) is formed in the main segment (10) and is formed through the top end and the bottom end of the main segment (10); and
each one of the first cap (14) and the second cap (15) has a guiding groove (16) defined in the cap (14,15) at a side facing the main segment (13) and communicating with the spiral groove (11).

4. The rotating member as claimed in any one of claims 1 to 3, wherein multiple recycling paths are formed in the body (10).

5. The rotating member as claimed in claim 1 or 4 further comprising a guiding member (40) mounted on the body (10) at a position corresponding to the communicating channel (12) to guide the balls (30) to enter smoothly into the spiral groove (11) from the communicating channel (12).

6. The rotating member as claimed in claim 1 or 4, wherein he body (10A) further has at least one cutout(18A) formed in the outer surface of the body(10A);
at least one guiding members(40A) is mounted respectively in the at least one cutout(18A); and
each one of the at least one guiding member (40A) has a guiding channel (42A) defined in the guiding member (40A) at a side facing the body (10A) and corresponding to and communicating with the communicating channel (12A) to hold the balls (30A) slidably in the guiding channel (42A) and the communicating channel (12A).
